# DEMANDE DE BREVET EUROPEEN

(11) **EP 1 132 339 A1**
(43) Date de publication de la demande: **12.09.2001**
(21) Numéro de dépôt: 01420009.1
(22) Date de dépôt: 16.01.2001
(51) Int. Cl.: B67D 5/32, F16K 27/07

(54) **Dispositif de vidange pour cuves et citernes**

(30) Priorité: 19.01.2000 FR 0000954
(71) Demandeur: Ades Technologies (S.A. Conseil d'Administration), 42000 Saint Etienne (FR)
(72) Inventeur: Gueton, Georges, 42100 Saint Etienne (FR)
(74) Mandataire: Dupuis, François

(57) **Abrégé**

Le dispositif d'évacuation du fluide, type pétrole, fuel, est remarquable en ce qu'il comprend un corps (8-26) qui est fixé directement ou de manière rapportée dans la partie basse de la cuve (1), ledit corps étant agencé avec des ouvertures principales (8.1 - 8.2) et (28a - 28b) permettant le passage d'un fluide principal, à savoir le pétrole ou fuel, puis son évacuation, et des ouvertures secondaires (8.3 - 8.4) et (28c - 28d) pour le passage de l'air, ledit corps étant agencé pour recevoir intérieurement, et permettre le positionnement réglable d'un boisseau tournant (7-28), lui même agencé avec un conduit (11-30) permettant la distribution d'un fluide secondaire, à savoir de l'air, ledit boisseau tournant présentant des ouvertures principales (7a - 7b) et secondaires (7c - 7d), ledit boisseau tournant étant sollicité par des moyens de commande (5 - 6) pour assurer son ouverture ou fermeture, en permettant ainsi simultanément la vidange du fluide principal hors de la cuve et l'insertion du fluide secondaire dans la cuve, le conduit (11 - 30) disposé dans le boisseau tournant étant relié, d'une part, au dispositif d'arrivée d'air (17 - 23) situé dans la partie supérieure ou inférieure de la cuve et, d'autre part, à une prise (18) intérieure d'air, disposée à l'intérieur de la cuve.

## Description

L'invention se rattache au secteur technique des cuves et citernes pour le transport de fluides du type pétrole, lesdites cuves et citernes pouvant être disposées sur des véhicules ou transporteurs de toutes natures.

L'invention se rattache également au secteur technique des cuves et citernes pour le stockage de fluide du type pétrole, non limitativement.

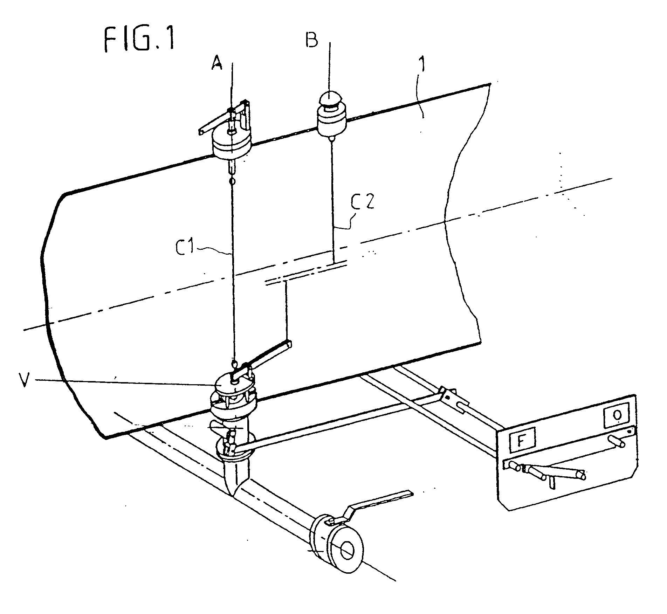

En se référant à la figure 1 des dessins, on a représenté en section, une cuve ou citerne qui est aménagée selon l'art antérieur avec, dans sa partie basse, un dispositif de vidange du pétrole, et dans sa partie haute, avec un dispositif de mise à l'air et une commande d'ouverture. Le dispositif de vidange est situé dans la partie basse de la citerne ou cuve et comprend un moyen d'ouverture à clapets permettant l'évacuation du pétrole. Ce dispositif de vidange est associé à l'aide de câbles au dispositif de mise à l'air disposé dans la partie supérieure de la cuve ou citerne, ainsi qu'au dispositif de commande d'ouverture.

Les câbles utilisés sont généralement métalliques et traversent l'intérieur de la cuve. Il est nécessaire que la cuve ne soit pas remplie en totalité de pétrole ou fuel, ou autres liquides similaires, de manière à laisser un espace ou intervalle à l'air, pour éviter les surpressions.

Lorsque l'opérateur veut vidanger la citerne, il doit actionner le dispositif de commande (A) qui entraîne par le premier câble (C1) l'ouverture du dispositif de vidange (V) et par le second câble (C2), l'ouverture du dispositif de mise à l'air (B). Ce dernier permet une introduction d'air nouveau, permettant d'éviter des dépressions. Dans cette mise en oeuvre, l'opération s'effectue en deux temps successifs, avec un début de vidange, puis une mise à l'air introduite dans la citerne, la vidange commençant préalablement. La maintenance d'un tel système est lourde, de part la multiplication des composants nécessaires au fonctionnement.

Par ailleurs, la remise en place des composants après maintenance et des câbles en particulier, requiert de nouveaux réglages à effectuer.

Un autre problème réside dans la déformation de la cuve ou citerne, qui est généralement cylindrique, due aux pressions résultant de la charge introduite. Il se produit en effet, une variation des dimensions de la cuve ou citerne, avec une augmentation du brin mou des câbles (C1 - C2) de liaison, entraînant une diminution d'ouverture du dispositif de mise à l'air. Dans certains cas, des ruptures de câbles ont été constatées, car leur longueur n'était pas établie pour tenir compte des déformations de la cuve, des allongements diamétraux en résultant.

Un autre problème réside dans la situation d'accident, c'est-à-dire de renversement de la cuve ou citerne, d'une manière malencontreuse. Dans ce cas, le fluide contenu créé un balourd qui entraîne une déformation substantielle de la citerne. Les câbles ont une tendance à casser. Le dispositif de mise à l'air ne fonctionne pas, n'étant pas sollicité. Il y a donc un risque d'implosion.

Face à ces contraintes, le but recherché était de concevoir un dispositif de vidange de cuve ou citerne, qui répondent à des critères de sécurité en toutes circonstances et de maintenance améliorée.

Diverses orientations ou recherches étaient possibles à partir notamment, d'études de renforcement sur les câbles intermédiaires reliant le dispositif de vidange et le dispositif de mise à l'air. En pratique, les solutions examinées n'étaient nullement satisfaisantes en répondant partiellement aux problèmes posés.

On connaît par le brevet BE 408705 un appareil de remplissage, de transvasement et de vidage doté d'un dispositif de fermeture pour bidons, le fluide contenu étant de l'huile ou de l'essence.

Cet appareil comprend un corps agencé avec des ouvertures pour le passage d'un fluide en recevant une clé tournante agencée avec des ouvertures de sorte qu'en combinaison le fluide peut passer. Cet appareil outre son application différente ne prévoit et ne permet pas de gérer la distribution de deux fluides de nature différente simultanément dans le cas d'une construction simplifiée facilitant la maintenance. L'appareil décrit dans ledit brevet belge 408705 divulgue au contraire une séparation et indépendance des fonctions de vidange et de mise à l'air.

En pratique, l'application différente de simples bidons dans un cas, et de cuves ou citernes dans l'autre rendent les paramètres et contraintes d'utilisation différentes.

La démarche du demandeur a donc été de s'orienter vers un concept inédit à sa connaissance, et permettant d'assurer simultanément les fonctions de vidange de la cuve ou citerne, et de mise à l'air pour assurer une introduction d'air dans la cuve et éviter toute implosion.

Selon une première caractéristique, le dispositif d'évacuation du fluide, type pétrole, pour vidanges de cuves et citernes, du type comprenant un corps agencé avec des ouvertures permettant le passage de fluide et recevant intérieurement un boisseau tournant agencé avec des ouvertures en permettant selon la position, l'écoulement et passage ou non du fluide, est remarquable en ce que le corps est fixé directement ou de manière rapportée dans la partie basse de la cuve, ledit corps étant agencé avec des ouvertures principales permettant le passage d'un fluide principal, à savoir le pétrole ou fuel, puis son évacuation, et des ouvertures secondaires pour le passage de l'air, ledit corps étant agencé pour recevoir intérieurement, et permettre le positionnement réglable d'un boisseau tournant, lui même agencé avec un conduit permettant la distribution d'un fluide secondaire, à savoir de l'air, ledit boisseau tournant présentant des ouvertures principales et secondaires, ledit boisseau tournant étant sollicité par des moyens de commande pour assurer son ouverture ou fermeture, en permettant ainsi simultanément la vidange du fluide principal hors de la cuve et l'insertion du fluide secondaire dans la cuve, le conduit disposé dans le boisseau tournant étant relié, d'une part, au dispositif d'arrivée d'air situé dans la partie supérieure de la cuve et, d'autre part, à une prise intérieure d'air, disposée à l'intérieur de la cuve.

Pour fixer l'objet de l'invention, illustré aux figures des dessins, ou :

La figure 1 est une vue partielle et en coupe illustrant une cuve ou citerne selon l'art antérieur, agencée avec un dispositif de vidange, un dispositif de mise à l'air et une commande assurant le fonctionnement des deux dispositifs successivement.

La figure 2 est une vue à caractère schématique et en perspective illustrant le principe de fonctionnement du dispositif de l'invention.

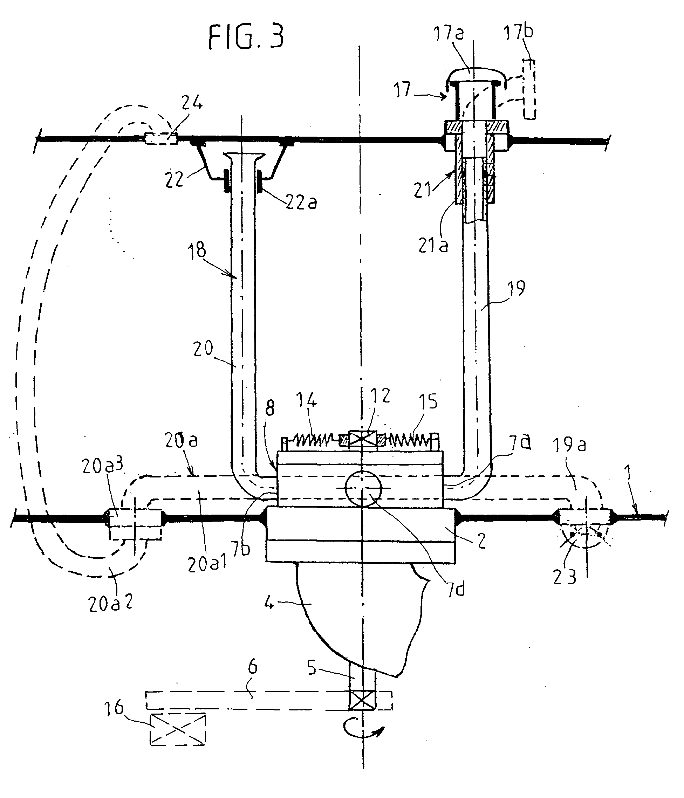

La figure 3 est une vue du dispositif de l'invention appliqué dans une cuve ou citerne, représenté partiellement, les traits en pointillé illustrant des dispositions en variante, dont le positionnement de certains des composants de l'invention.

La figure 4 est une vue en coupe selon la ligne A.A de la figure 2, du dispositif dans une première variante de réalisation, où la commande est assurée dans un plan axial vertical.

La figure 5 est une vue en variante du dispositif intégré dans une citerne ou cuve, dans une seconde mise en oeuvre, où la commande est assurée dans un plan axial horizontal.

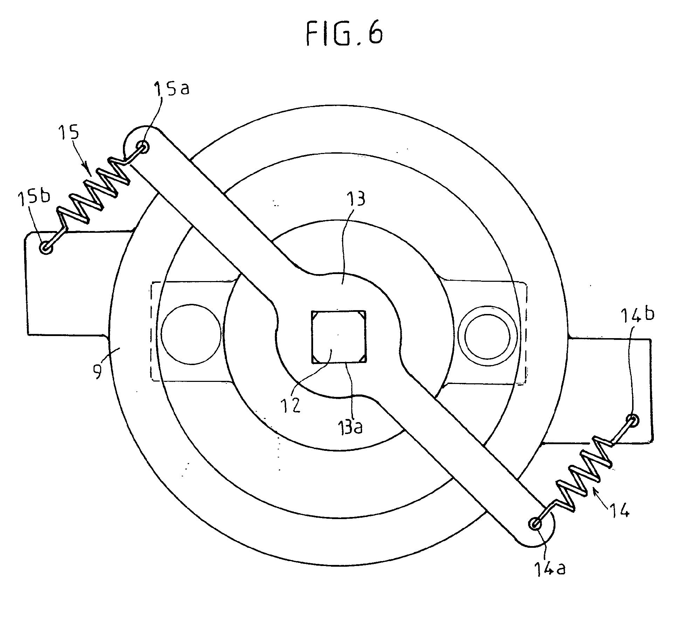

La figure 6 est une vue de dessus de l'ensemble corps boisseau tournant avec le descriptif de rappel en position fermeture

Afin de rendre plus concret l'objet de l'invention, on le décrit maintenant d'une manière non limitative illustré aux figures des dessins.

On utilise tout d'abord le terme générique « cuve » pour identifier des cuves, citernes, et contenants analogues, susceptibles de recevoir un fluide du type pétrole, fuel par exemple ou similaires.

La cuve peut être en position fixe au sol, à l'aide de supports quelconques, ou être transportée sur des véhicules aménagés à cet effet, tels que camions citernes, wagons, ou autres. La cuve est généralement de forme cylindrique, mais l'invention peut s'appliquer à tout autre configuration dimensionnelle et de forme de la cuve. Cette cuve est réalisée en tout matériau approprié, garantissant, bien entendu, des problèmes de sécurité.

Le dispositif d'évacuation du fluide, type pétrole, fuel, comprend un corps qui est fixé directement ou de manière rapportée dans la partie basse de la cuve, ledit corps étant agencé avec des ouvertures permettant le passage d'un fluide principal, à savoir le pétrole ou fuel, puis son évacuation, ledit corps étant agencé pour recevoir intérieurement, et permettre le positionnement réglable d'un boisseau tournant, lui même agencé avec un conduit permettant la distribution d'un fluide secondaire, à savoir de l'air, ledit boisseau tournant étant sollicité par des moyens de commande pour assurer son ouverture ou fermeture, en permettant ainsi simultanément la vidange du fluide principal hors de la cuve et l'insertion du fluide secondaire dans la cuve, le conduit disposé dans le boisseau tournant étant relié, d'une part, au dispositif d'arrivée d'air situé dans la partie supérieure de la cuve et, d'autre part, à une prise intérieure d'air, disposée à l'intérieur de la cuve.

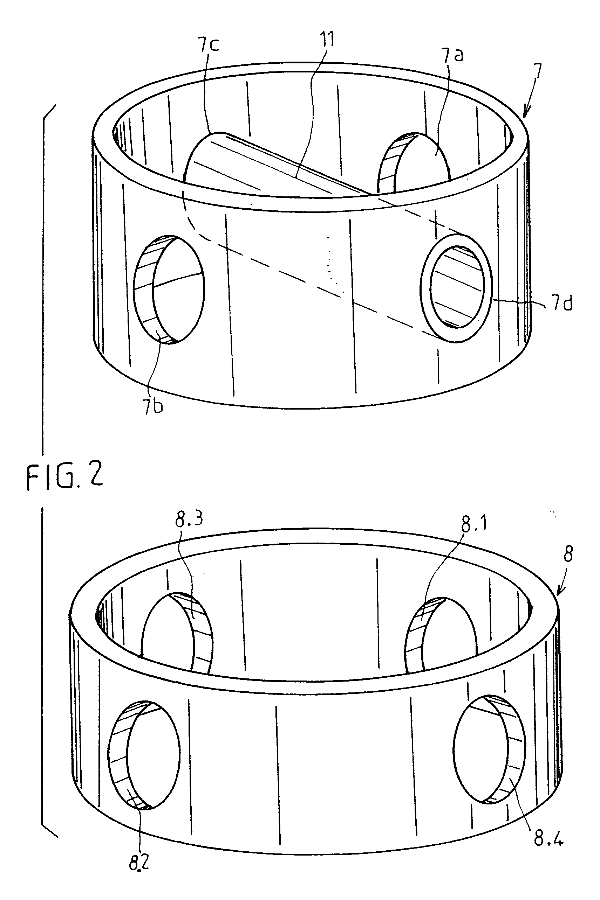

Ainsi, en se référant à la figure 2 schématique des dessins, le corps en position fixe dans la cuve, est agencé avec deux ouvertures principales diamétralement opposées permettant le passage du fluide principal, et deux autres ouvertures secondaires orthogonales aux précédentes, et permettant le passage du fluide secondaire. Le boisseau tournant comprend également deux ouvertures principales permettant le passage du fluide principal et deux ouvertures secondaires reliées par un conduit étanche, permettant le passage du fluide secondaire. La position du boisseau tournant par rapport au corps précité définit ainsi les phases de vidange et de prise d'air lorsque les ouvertures formées sur le corps sont en regard des ouvertures formées sur le boisseau tournant. Lorsque ledit boisseau tournant est orienté dans une angulation différente par rapport au corps et par exemple 45°, 1 'ensemble des ouvertures formées sur le corps du boisseau tournant, sont obturées les unes les autres, par les parties de parois en regard du corps et du boisseau tournant. Des moyens d'étanchéité appropriés évitent les pertes de fluide.

L'ensemble précité, corps - boisseau tournant peut être ainsi inséré dans la cuve soit avec un axe de rotation du boisseau tournant vertical, soit horizontal.

Dans une mise en oeuvre les axes de sortie de fluide principale et secondaire peuvent être orthogonales.

Il convient maintenant de se référer aux figures illustrant une première mise en oeuvre de l'invention.

La cuve est référencée dans son ensemble par (1). Elle présente dans sa partie basse, une couverture permettant l'insertion du dispositif de l'invention. Plus spécifiquement, une bride (2) est solidarisée par soudure (3) à la cuve (1). Cette bride est aménagée pour permettre la réception et fixation sur sa facé apparente extérieure, d'une manchette (4) de commande et de vidange du fluide principal. Cette manchette a une configuration coudée, par exemple, comme représentée aux dessins. Elle présente un bossage (4a) de large épaisseur, pour permettre le positionnement, l'étanchéité et le guidage d'un bras de commande (5) traversant et associé à une poignée de commande (6) de l'ouverture du boisseau tournant (7).

Ladite bride est agencée sur son autre face, avec un épaulement (2a) permettant le centrage, la fixation d'un corps (8) assemblé fixement à ladite bride. La liaison peut s'effectuer par vissage ou autrement.

Le corps est cylindrique et creux intérieurement avec deux ouvertures principales (8.1) (8.2) opposées diamétralement et deux ouvertures secondaires (8.3) (8.4) opposées diamétralement et perpendiculaires aux précédentes. Dans sa partie supérieure, le corps est agencé directement ou de manière rapportée avec un couvercle (9) fixé par des éléments de liaison (10) non représentés. Le couvercle présente une face supérieure plane (9a).

Ledit corps permet la réception, le guidage et la rotation du boisseau tournant (7). Ce boisseau est également agencé avec deux ouvertures principales (7a) (7b) diamétralement opposées de même section avantageusement que les ouvertures principales (8.1) (8.2) du corps. Le boisseau comprend également deux ouvertures secondaires (7c) (7d) opposées diamétralement, entre lesquelles est introduit un conduit (11) traversant dans le volume intérieur ainsi considéré. Des moyens d'étanchéité assurent le contrôle de circulation des fluides.

Le boisseau tournant est agencé dans sa partie inférieure, à partir du conduit précité, avec une forme en nervure (7e) disposée verticale et située dans l'alignement du bras de commande (5).

Plus spécifiquement, ce dernier présente, dans son extrémité supérieure (5a), une forme en chape (5b) ou en fourche, à l'intérieur de laquelle est centrée librement, la forme en nervure (7e) précitée. Cette dernière reste néanmoins maintenue correctement par la forme en chape précitée, de manière à permettre la rotation du boisseau tournant lors de la sollicitation de la poignée de commande. Le montage reste néanmoins libre, de sorte qu'en cas d'accident, il puisse y avoir une séparation immédiate du bras de commande du boisseau tournant et éviter toute mauvaise manipulation.

Dans sa partie supérieure, le boisseau tournant est agencé avec un carré d'entraînement (12) débordant en saillie du couvercle (9). Cela permet le positionnement d'un bras (13) agencé dans sa partie centrale avec une ouverture (13a) s'engageant sur le carré d'entraînement (12) précité. Le bras (13) est susceptible d'un pivotement, à l'encontre de deux ressorts de rappel (14) (15), dont une extrémité (14a) (15a) est accouplée à l'extrémité du bras et l'autre extrémité (14b) (15b) soit au couvercle (9), soit au corps proprement dit, qui sont fixes. Le pivotement dudit bras à l'encontre des éléments de rappel précité, est assuré par la manipulation de la poignée de commande, pour l'ouverture de la vidange. Des moyens de verrouillage en position (16) illustrés schématiquement, sont disposés sur ladite poignée pour permettre le blocage en position de celle ci pendant le temps de la vidange.

Selon une autre disposition, le conduit traversant le boisseau tournant est directement en relation avec le dispositif d'amenée d'air (17), disposé dans la partie supérieure de la cuve, ainsi qu'avec la prise intérieure d'air (18), permettant l'évacuation d'air prélevée, à l'intérieur de la cuve.

Plus particulièrement, des conduits complémentaires (19) et (20) assurent la liaison entre le conduit traversant le boisseau tournant et le dispositif d'amenée d'air (17), d'une part, et entre le conduit à son autre extrémité avec la prise d'air, d'autre part.

Dans une première mise en oeuvre, le dispositif d'amenée d'air (17) est fixé dans la partie supérieure de la cuve, par tous moyens appropriés, en permettant une arrivée d'air libre (17a) ou un raccordement (17b) à une source.

Une bague (21) est fixée sur la cuve en présentant une portée cylindrique de grande longueur (21a), introduite dans la cuve. Cette portée de grande longueur permet un montage libre et flottant du conduit (19) à la manière d'un ensemble télescopique pour absorber les modifications de dimensions de la cuve, comme indiqué initialement. Des joints de guidage et d'étanchéité assurent la liaison conduit (19) - portée cylindrique (21). Le conduit (19) débouche dans sa partie inférieure, près de l'ouverture secondaire (7c) d'entrée du boisseau tournant (7), le conduit (20) débouche près de l'ouverture secondaire (7d) de sortie du boisseau tournant, dans le prolongement du conduit traversant, pour arriver jusqu'à la prise intérieure (18). Celle ci est sensiblement en retrait de la parois de la cuve, pour générer un volume d'air approprié.

Un support (22) avec ouverture (22a) permet le passage du conduit (20) et son guidage, et limite l'écoulement du produit transporté, tout en permettant l'absorption des variations dimensionnelles de la cuve. Dans cette mise en oeuvre, les conduits (19 et 20) se trouvent à l'intérieur de la cuve.

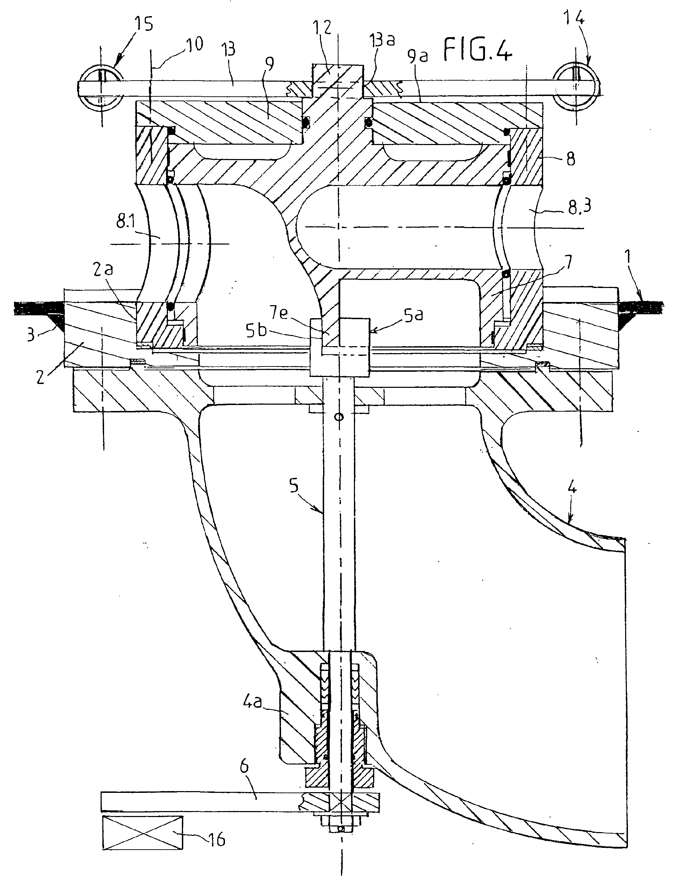

Dans la représentation figure 4 des dessins, on a illustré, en traits pointillés, une variante de positionnement desdits conduits dans les conditions suivantes : le conduit (19a) reste dans la partie basse de la cuve et débouche dans la partie inférieure de celle-ci avec une arrivée d'air (23). L'autre conduit (20a) a une partie (20a1) à l'intérieur de la cuve en sortie du boisseau tournant et se raccorde à un conduit extérieur (20a2) qui contourne la cuve jusqu'à aboutir dans la partie supérieure de celle-ci. Ce conduit extérieur débouche dans la cuve à l'aide d'un moyen (24). La liaison (20a3) entre les parties (20a1 et 20a2) s'effectue de toute manière appropriée.

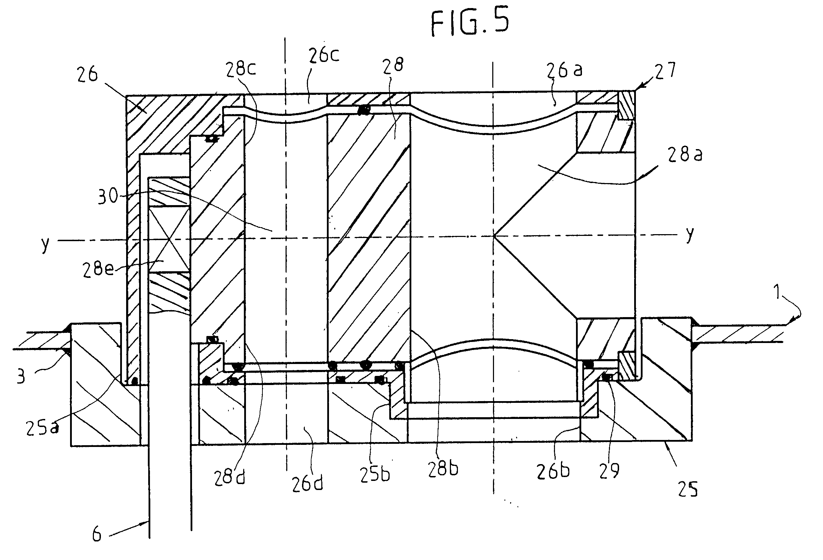

Dans une autre mise en oeuvre représentée figure 5 des dessins, le montage de l'ensemble est représenté avec un axe horizontal. La bride de fond (25) est fixée; comme précédemment, à la cuve par soudure ou autrement. Cette bride est agencée avec des épaulements intérieurs (25a - 25b) pour permettre le positionnement, le centrage et la liaison fixe du corps (26). L'axe longitudinale (Y-Y) de celui-ci est horizontal. Un couvercle de fermeture (27) ou flasque est disposé verticalement contre la face transversale du corps et de la bride. Le corps présente, comme précédemment, deux ouvertures principales (26a - 26b) pour le passage du pétrole ou autre fluide, et deux passages secondaires (26c - 26d) pour le passage de l'air. Lesdites ouvertures précitées disposées diamétralement sur le corps deux à deux sont disposées selon des axes parallèles. Le boisseau tournant (28) est inséré dans ledit corps en prenant appui sur des portées appropriées, des joints (29) assurant l'étanchéité. Ledit boisseau tournant (28) présente également deux ouvertures principales (28a - 28b) pour être en relation avec les ouvertures correspondantes formées sur le corps. Ledit boisseau tournant présente deux ouvertures secondaires (28c - 28d) reliées entre elles par un conduit (30) et permettant le passage de l'air, celles-ci étant en relation avec les ouvertures secondaires correspondantes formées sur le corps. L'une des extrémités du boisseau tournant présente, comme précédemment, un carré d'entraînement en saillie (28e) sur lequel est disposé et centré le bras de commande (6) de l'ouverture-fermeture de l'ensemble du dispositif permettant la vidange et l'insertion de l'air dans la cuve en phase de vidange. Comme précédemment, une manchette se situe en regard de l'une des ouvertures principales du corps pour l'évacuation du fluide principal. Le conduit (30), disposé dans le boisseau tournant, est lui aussi en regard des différents conduits (19 - 20) évoqués précédemment dans la mise en oeuvre de la première variante. Il y a simplement adaptation du positionnement desdits conduits en fonction de la configuration et du positionnement de l'ensemble corps et boisseau tournant.

Sans sortir du cadre de l'invention et par rapport à la deuxième variante précitée, il est possible d'aménager l'ensemble selon une orientation angulaire entre le conduit d'air disposé dans le boisseau tournant et la zone de circulation et de passage du pétrole, dans un plan orthogonal, sans modifier les caractéristiques de l'invention.

En dernier lieu et en se rapportant à la seconde variante, un dispositif de rappel élastique par ressorts peut être aménagé comme précédemment pour la faciliter la remise en position du boisseau tournant. Un dispositif de verrouillage en position peut être aménagé pour permettre le blocage temporaire du boisseau tournant lors de l'évacuation du pétrole.

Les avantages ressortent bien de l'invention. On souligne la nouvelle conception compacte et intégrée de l'ensemble corps boisseau tournant avec la suppression des câbles de liaison facilitant ainsi la maintenance et supprimant tout réglage. Par ailleurs, l'actionnement de l'ensemble permet simultanément le début de la vidange et la prise d'air extérieur. On supprime ainsi tout risque d'implosion. Les couples d'orifices réalisés sur le corps et boisseau tournant sont avantageusement dans le même plan permettant ainsi une réduction de l'encombrement.

La mise en oeuvre de l'invention permet une réduction des pertes de charge, grâce à l'utilisation d'un ensemble formant robinet, en remplacement des clapets existants selon l'art antérieur.

Le dispositif selon l'invention permet une distribution de fluides de nature différente dans les meilleures conditions de sécurité.

L'invention s'applique à toutes cuves et citernes pour le stockage et/ou le transport de tous types de fluides, tels que pétrole.

Le boisseau tournant peut être sphérique ou cylindrique à axe horizontal ou vertical.

## Revendications

1. Dispositif d'évacuation du fluide, type pétrole, fuel, pour vidange de cuves et citernes, du type comprenant un corps (8-26) agencé avec des ouvertures permettant le passage de fluide et recevant intérieurement un boisson tournant (7-28) agencé avec des ouvertures et permettant selon la position l'écoulement et passage ou non du fluide, **caractérisé en ce que** le corps (8-26) est fixé directement ou de manière rapportée dans la partie basse de la cuve (1), ledit corps étant agencé avec des ouvertures principales (8.1 - 8.2) et (28a - 28b) permettant le passage d'un fluide principal, à savoir le pétrole ou fuel, puis son évacuation, et des ouvertures secondaires (8.3 - 8.4) et (28c - 28d) pour le passage de l'air, ledit corps étant agencé pour recevoir intérieurement, et permettre le positionnement réglable d'un boisseau tournant (7-28), lui même agencé avec un conduit (11-30) permettant la distribution d'un fluide secondaire, à savoir de l'air, ledit boisseau tournant présentant des ouvertures principales (7a - 7b) et secondaires (7c - 7d), ledit boisseau tournant étant sollicité par des moyens de commande (5 - 6) pour assurer son ouverture ou fermeture, en permettant ainsi simultanément la vidange du fluide principal hors de la cuve et l'insertion du fluide secondaire dans la cuve, le conduit (11 - 30) disposé dans le boisseau tournant étant relié, d'une part, au dispositif d'arrivée d'air (17 - 23) situé dans la partie supérieure ou inférieure de la cuve et, d'autre part, à une prise (18) intérieure d'air, disposée à l'intérieur de la cuve.

2. Dispositif selon la revendication 1, caractérisé en ce que le corps (8 - 26) est solidarisé à la cuve, directement ou par le biais d'une bride (2), et débouche vers une manchette (4) de vidange du fluide, ledit corps étant aménagé intérieurement pour permettre le montage, le guidage et la rotation partielle du boisseau tournant (7 - 28) en vue de mettre en communication ou non lesdites ouvertures principales et secondaires pour le passage ou non des fluides principal et secondaire.

3. Dispositif selon la revendication 2, caractérisé en ce que la partie supérieure du corps est agencée directement ou d'une manière rapportée avec un couvercle de liaison, ce dernier autorisant le passage d'une extrémité du boisseau tournant formant carré d'entraînement, ladite extrémité étant associée à un moyen sous forme de bras (13) pivotant à l'encontre de ressorts de rappel (14 - 15) et permettant le rappel en position du boisseau tournant lors de la fermeture de la cuve hors vidange.

4. Dispositif selon l'une quelconque des revendicationl à 3, caractérisé en ce que le boisseau tournant présente, dans sa partie inférieure, une forme en nervure (7e) disposée dans l'alignement du bras de commande (5), selon un montage libre, ledit bras de commande traversant un bossage formé sur la manchette pour assurer son guidage, l'étanchéité et son maintien, ledit bras de commande étant associé à une poignée de commande (6).

5. Dispositif selon la revendication 4, caractérisé en ce que la poignée de commande (6) reçoit des moyens de verrouillage en position (16) permettant de bloquer l'ouverture du boisseau tournant lors de la vidange.

6. Dispositif selon l'une quelconque des revendications 1 à 5, caractérisé en ce que le conduit (11 - 30) traversant le boisseau est directement en relation avec des conduits complémentaires (19 - 20) avec le dispositif d'amenée d'air (17 - 23) et une prise intérieure d'air (18 - 24) disposée dans la partie intérieure de la cuve.

7. Dispositif selon la revendication 6, caractérisé en ce que le dispositif d'amenée d'air (17) fixé dans la partie supérieure de la cuve présente une bague (21) fixée à la cuve avec une portée (21a) de grande longueur permettant le montage libre et flottant du conduit (19), d'une manière télescopique, pour absorber les variations de dimensions de la cuve, des joints d'étanchéité et de guidage assurant la liaison de l'ensemble, et en ce que le conduit (19) débouche près de l'ouverture secondaire (7c - 28c) d'entrée du boisseau tournant.

8. Dispositif selon l'une quelconque des revendications 6 et 7, caractérisé en ce que le conduit (20) débouche près de l'ouverture secondaire (7d - 28d) de sortie du boisseau tournant et se prolonge jusqu'à la prise intérieure d'air (18 - 24).
